# EUROPEAN PATENT SPECIFICATION

(11) **EP 3 410 290 B1**
(45) Date of publication and mention of the grant of the patent: **16.03.2022**
(21) Application number: 17743745.6
(22) Date of filing: 25.01.2017
(51) Int. Cl.: G06F 3/16, A63F 13/54, A63F 13/355, A63F 13/358

(54) **AUDIO PROCESSING METHOD, SERVER, USER EQUIPMENT, AND SYSTEM**
AUDIOVERARBEITUNGSVERFAHREN, SERVER, BENUTZERGERÄT UND SYSTEM
PROCÉDÉ DE TRAITEMENT AUDIO, SERVEUR, ÉQUIPEMENT D'UTILISATEUR ET SYSTÈME

(30) Priority: 29.01.2016 CN 201610067813
(43) Date of publication of application: 05.12.2018
(73) Proprietor: Tencent Technology (Shenzhen) Company Limited, Shenzhen, Guangdong 518057 (CN)
(72) Inventor: WANG, Weiguang, Shenzhen, Guangdong 518057 (CN); ZHUANG, Zhiwei, Shenzhen, Guangdong 518057 (CN)
(74) Representative: AWA Sweden AB
(86) International application number: PCT/CN2017/072592
(87) International publication number: WO 2017/129130

(56) References cited:
- WO-A1-2015/018229
- WO-A1-2016/014603
- CN-A- 102 355 504
- CN-A- 103 067 129
- CN-A- 104 025 521
- CN-A- 105 786 441
- US-A- 6 106 399

## Description

This application claims priority to Chinese Patent Application No. 201610067813.1, entitled "AUDIO PROCESSING METHOD, SERVER, USER EQUIPMENT, AND SYSTEM" filed with the Chinese Patent Office on January 29, 2016.

### FIELD OF THE TECHNOLOGY

The present disclosure relates to the field of cloud technology, and in particular, to an audio processing method, a server, user equipment, and a system.

### BACKGROUND OF THE DISCLOSURE

With the rapid development of network bandwidth in recent years, a cloud interactive system is developed with increasingly mature cloud computing technology. A current cloud interactive system usually includes a server and multiple user equipment. The server may be a cluster server. Multiple interactive applications may be executed in the cloud interactive system. For an application related to audio processing in the cloud interactive system in the existing technology, the server usually plays an audio in the interactive applications and obtains a clip of the played audio in real time at a certain frequency. The clip is sent to the user equipment, so that the user equipment can play the audio of the server end.

In the existing technology, an audio processing solution from the server to the user equipment is that the server obtains a clip of audio data of the server in real time at a certain frequency. During transmission, network fluctuation has a great effect on the audio clip, leading to audio freeze. In addition, during network transmission of the audio data, in a case of high network delay, the user equipment cannot receive a new clip of the audio data when the previous clip of the audio data is completely played. Therefore, no audio data is played in an interval of playing the two clips of the audio data, also leading to audio freeze. Moreover, the server has to continuously obtain audio clips. Some audio clips may be the same, but are sent repeatedly, causing large network traffic from the server to the user equipment. Further, when the server repeatedly plays cycled background music, especially when music is mixed, the server cannot extract each music component, causing poor playing quality of an audio of the user equipment.

A document (US 6106399A) relates to the use of client and server software communicating with each other via the internet to create and maintain a multi-user role-playing game. Whenever the server wishes the client to display a description, it sends a number representing that object (2 bytes compared with up to 500 bytes for a full text description). The client refers to the cache and prints the description. If it does not find the description in its cache, it will request the description from the server at that time. Thus, no description is ever sent more than once.

### SUMMARY

An audio processing method provided in the embodiments of the present disclosure may improve the playing quality of an audio at a user equipment end and reduce network traffic from the server to the user equipment. The embodiments of the present disclosure further provide a corresponding server, user equipment, and a system.

A first aspect of the present disclosure provides an audio processing method, applied to a cloud interactive system, the cloud interactive system including a user equipment and a server, and the method including:
detecting, by the server, function call from an interactive application to an audio interface when running the interactive application, and generating, by the server according to a type of the audio interface, an audio instruction corresponding to the type when the function call from the interactive application to the audio is detected;
when the server determines that the audio instruction needs audio data according to the type of the audio interface, determining, by the server, whether there exists a sending record that the audio data corresponding to the audio instruction is already sent to the user equipment; and
sending, by the server, the audio instruction to the user equipment if the sending record exists, where the audio instruction is used to instruct the user equipment to use the cached audio data when executing the audio instruction;
calling, by the server, the audio data corresponding to the audio instruction if the sending record does not exist, and sequentially sending the audio data and the audio instruction to the user equipment.

A second aspect of the present disclosure provides an audio processing method, applied to a cloud interactive system, the cloud interactive system including a user equipment and a server, and the method including:
receiving, by the user equipment, an audio instruction sent by the server, wherein the server detects a function call from an interactive application to an audio interface when running the interactive application, and generates, according to a type of the audio interface, the audio instruction corresponding to the type when the function call from the interactive application to the audio interface is detected; when the server determines that the audio instruction needs audio data according to the type of the audio interface, the server determines whether there exists a sending record that the audio data corresponding to the audio instruction is already sent to the user equipment, and sends the audio instruction to the user equipment if the sending record exists;
obtaining, by the user equipment, audio data corresponding to the audio instruction from a cache; and
using, by the user equipment, the cached audio data when executing the audio instruction;
receiving, by the user equipment, the audio data corresponding to the audio instruction sent by the server before receiving the audio instruction, wherein the server determines that the sending record does not exist and calls the audio data corresponding to the audio instruction.

A third aspect of the present disclosure provides a server, applied to a cloud interactive system, the cloud interactive system further including a user equipment, and the server including:
a detecting unit, configured to detect function call from an interactive application to an audio interface when running the interactive application;
a generating unit, configured to generate, according to a type of the audio interface, an audio instruction corresponding to the type when the function call from the interactive application to the audio interface is detected;
a determining unit, configured to when the server determines that the audio instruction needs audio data according to the type of the audio interface, determine whether there exists a sending record that the audio data corresponding to the audio instruction generated by the generating unit is already sent to the user equipment; and
a sending unit, configured to send the audio instruction to the user equipment if the sending unit determines that the sending record exists, where the audio instruction is used to instruct the user equipment to use the cached audio data when executing the audio instruction;
a function call unit, configured to call the audio data corresponding to the audio instruction when the determining unit determines that the sending record does not exist; wherein the sending unit is further configured to sequentially send the audio data called by the function call unit and the audio instruction to the user equipment.

A fourth aspect of the present disclosure provides a user equipment, applied to a cloud interactive system, the cloud interactive system further including a server, and the user equipment including:
a receiving unit, configured to receive an audio instruction sent by the server , wherein the server detects a function call from an interactive application to an audio interface when running the interactive application, and generates, according to a type of the audio interface, the audio instruction corresponding to the type when the function call from the interactive application to the audio interface is detected; when the server determines that the audio instruction needs audio data according to the type of the audio interface, the server determines whether there exists a sending record that the audio data corresponding to the audio instruction is already sent to the user equipment, and sends the audio instruction to the user equipment if the sending record exists;
an obtaining unit, configured to obtain audio data corresponding to the audio instruction received by the receiving unit from a cache; and
a processing unit, configured to use the cached audio data obtained by the obtaining unit when executing the audio instruction;
wherein the receiving unit is further configured to receive the audio data corresponding to the audio instruction sent by the server before receiving the audio instruction, wherein the server determines that the sending record does not exist and calls the audio data corresponding to the audio instruction.

A fifth aspect of the present disclosure a cloud interactive system, including a user equipment and a server,
the server being configured to:
detect function call from an interactive application to an audio interface when running the interactive application;
generate, according to a type of the audio interface, an audio instruction corresponding to the type when the function call from the interactive application to the audio interface is detected;
when the server determines that the audio instruction needs audio data according to the type of the audio interface, determine whether there exists a sending record that the audio data corresponding to the audio instruction is already sent to the user equipment; and
send the audio instruction to the user equipment if the sending record exists, where the audio instruction is used to instruct the user equipment to use the cached audio data when executing the audio instruction;
call the audio data corresponding to the audio instruction if the sending record does not exist, and sequentially sending the audio data and the audio instruction to the user equipment; and
the user equipment being configured to:
   receive an audio instruction sent by the server;
   obtain audio data corresponding to the audio instruction from a cache; and
   use the cached audio data when executing the audio instruction;
   receive the audio data corresponding to the audio instruction sent by the server before receiving the audio instruction.

In the existing technology, user equipment needs to play an audio clip sent by a server to implement playing an audio at a server end by the user equipment. Compared with that, the embodiments of the present disclosure provide an audio processing method. The server sends an audio instruction to the user equipment to implement playing the audio at the server end by the user equipment, so as to improve the playing quality of an audio at a user equipment end. In addition, the server merely sends the audio instruction to the user equipment when the server determines that there exists a sending record that audio data corresponding to the audio instruction is already sent to the user equipment, without repeatedly sending the audio data, reducing network traffic from the server to the user equipment.

### BRIEF DESCRIPTION OF THE DRAWINGS

To describe the technical solutions in the embodiments of the present disclosure more clearly, the following briefly introduces the accompanying drawings required for describing the embodiments. Apparently, the accompanying drawings in the following description show merely some embodiments of the present disclosure, and a person skilled in the art may still derive other drawings from these accompanying drawings without creative efforts.
FIG. 1 is a schematic diagram of a cloud interactive system according to an embodiment of the present disclosure;
FIG. 2 is a schematic diagram of an audio processing method not according to the invention and included for illustration purposes only;
FIG. 3 is a schematic diagram of an audio processing method according to an embodiment of the present disclosure;
FIG. 4 is a schematic diagram of an audio processing method according to an embodiment of the present disclosure;
FIG. 5 is a schematic diagram of an audio processing method according to an embodiment of the present disclosure;
FIG. 6 is a schematic diagram of a server according to an embodiment of the present disclosure;
FIG. 7 is a schematic diagram of a server according to an embodiment of the present disclosure;
FIG. 8 is a schematic diagram of a server according to an embodiment of the present disclosure;
FIG. 9 is a schematic diagram of user equipment according to an embodiment of the present disclosure;
FIG. 10 is a schematic diagram of a server according to an embodiment of the present disclosure; and
FIG. 11 is a schematic diagram of user equipment according to an embodiment of the present disclosure.

### DESCRIPTION OF EMBODIMENTS

An audio processing method provided in the embodiments of the present disclosure may improve the playing quality of an audio at a user equipment end and reduce network traffic from the server to the user equipment. The embodiments of the present disclosure further provide a server, user equipment, and a system accordingly. Detailed descriptions are made below separately.

The following clearly and completely describes the technical solutions in the embodiments of the present disclosure with reference to the accompanying drawings in the embodiments of the present disclosure. Apparently, the described embodiments are merely some but not all of the embodiments of the present disclosure. All other embodiments obtained by a person skilled in the art based on the embodiments of the present disclosure without creative efforts shall fall within the protection scope of the present disclosure.

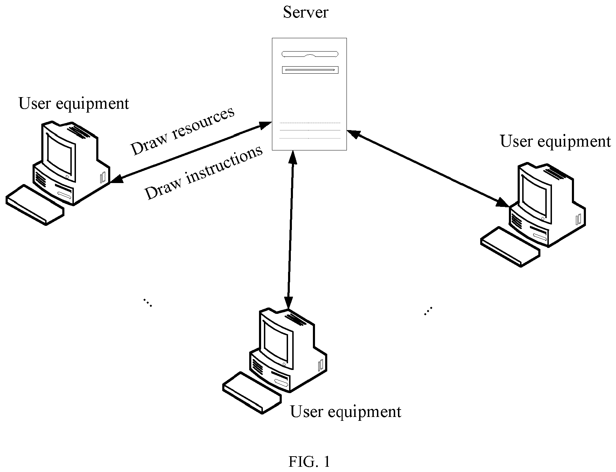

FIG. 1 is a schematic diagram of an embodiment of a cloud interactive system according to an embodiment of the present disclosure.

Referring to FIG. 1, the cloud interactive system can be understood as a cloud game system, usually including a server and user equipment, where the user equipment may be multiple and the server may further be a server cluster. The user equipment may be terminal devices such as a personal computer (PC), a laptop, and a smartphone. The server may be a dedicated game server. Currently, an audio processing solution for a game is to obtain an audio clip being played at a server end by the server and transmit the audio clip to a user equipment end to play, causing poor playing quality of an audio at the user equipment end and leading to large network traffic from the server to the user equipment.

In the embodiments of the present disclosure, the server using an audio instruction to instruct the user equipment to play audio data, so as to improve the playing quality of the audio at the user equipment end. In addition, the server merely sends the audio instruction when there is a sending record that the audio data is already sent to the user equipment. The user equipment may use the cached audio data to perform an audio operation when executing the audio instruction, so as to reduce the network traffic from the server to the user equipment.

The embodiments of the present disclosure involves a Hook function, that is, hook injection, which replaces an original function executing process with a self-defining function.

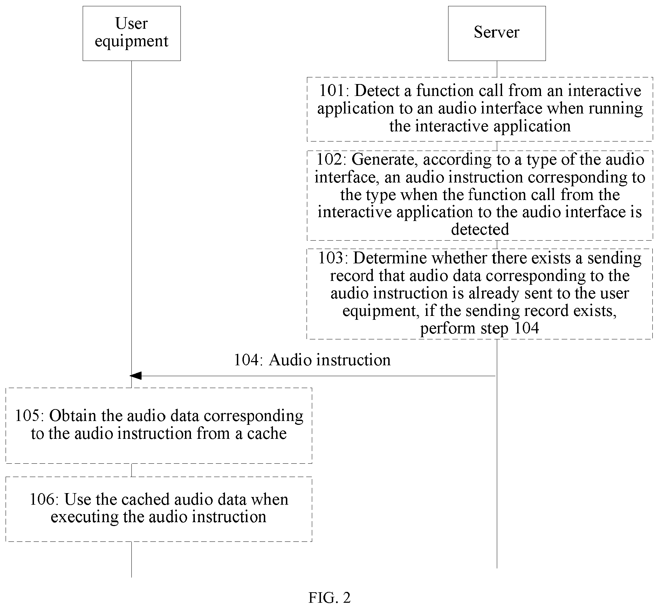

With reference to the cloud interactive system shown in FIG. 1, an audio processing process provided in the embodiments of the present disclosure is described referring to a schematic diagram of an audio processing method shown in FIG. 2.

Referring to FIG. 2, an embodiment of the audio processing method not according to the invention of the present disclosure includes steps S101 to S106.

In S101, the server detects a function call from an interactive application to an audio interface when running the interactive application.

With reference to a game scene, the step is to detect, by the server, a function call from a game to an audio interface of an audio software development kit (SDK) when running the game.

The step may include: detecting, by the server, the function call from the interactive application to the audio interface by using a Hook function for the audio interface; and determining the function call from the interactive application to the audio interface if a function call instruction of the interactive application to the audio interface is detected to enter the Hook function for the audio interface.

In S 102, the server generates, according to a type of the audio interface, an audio instruction corresponding to the type when the function call from the interactive application to the audio interface is detected.

There are multiple types of the audio interface, such as audio interfaces of creating audio, playing audio, mixing audio, and pausing audio.

A audio instruction generated according to the type of the audio interface has a corresponding function, for example, creating an audio, playing an audio, mixing an audio, and pausing an audio.

In fact, not all audio instructions need audio data. For example, an audio instruction of pausing audio does not need audio data. For an audio instruction that does not need audio data, the server may first determine that the audio data is not needed according to the type of the audio interface and directly send the audio instruction that does not need the audio data to the user equipment.

Because the audio instruction occupies little network traffic, a processing solution of an audio instruction that needs audio data is particularly illustrated in the embodiments of the present disclosure. However, the protection scope of the present disclosure is not limited.

In S103, the server determines whether there exists a sending record that audio data corresponding to the audio instruction is already sent to the user equipment.

The server may record the audio data sent to the user equipment, so as to avoid repeated sending.

In S 104, the server sends the audio instruction to the user equipment if the sending record exists.

When the sending record of the audio data corresponding to the audio instruction exists in the server, the server merely needs to send the audio instruction to reduce network traffic.

In S105, the user equipment obtains the audio data corresponding to the audio instruction from a cache after receiving the audio instruction sent by the server.

In S106, the user equipment uses the cached audio data to perform a corresponding audio operation when executing the audio instruction.

In the existing technology, the user equipment has to play an audio clip sent by a server to implement playing an audio at a server end by the user equipment. Compared with that, the embodiments of the present disclosure provide an audio processing method. The server sends an audio instruction to the user equipment to implement playing the audio at the server end by the user equipment, so as to improve the playing quality of an audio at a user equipment end. In addition, the server merely sends the audio instruction to the user equipment when the server determines that there exists a sending record that audio data corresponding to the audio instruction is already sent to the user equipment, without repeatedly sending the audio data, reducing network traffic from the server to the user equipment.

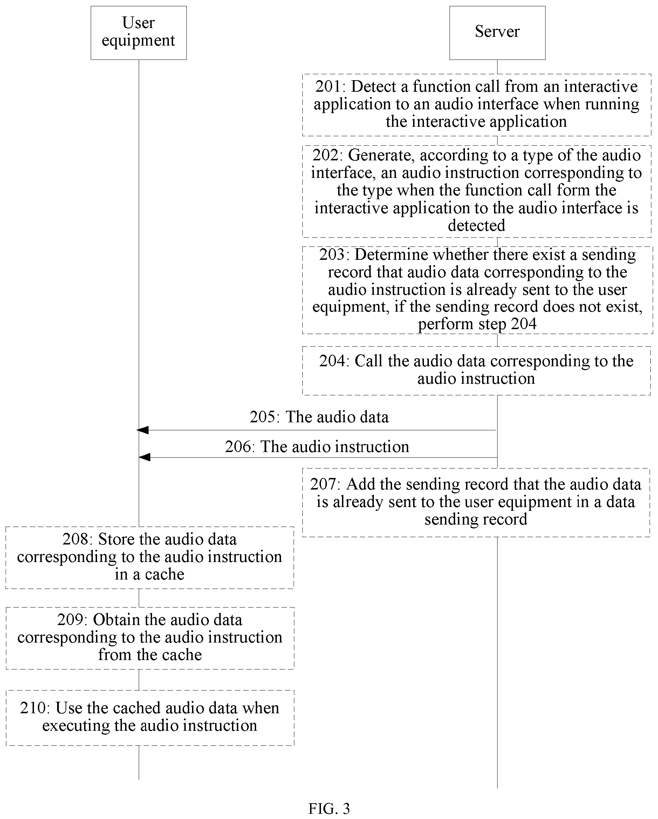

Referring to FIG. 3, the embodiment of the audio processing method provided in the present disclosure includes steps S201 to S210.

S201 to 203 are the same as S101 to 103 in the embodiment in FIG. 2. S201 to 203 may be understood with reference to S 101 to 103 in the embodiment in FIG. 2, which is not described herein.

In S204, the server calls the audio data corresponding to the audio instruction if the sending record does not exist. The audio data may be audio data in a compressed state.

The step may include: using, by the server, a Hook function for magnetic disk reading to call the audio data in the compressed state corresponding to the audio instruction; and function call the audio data in the compressed state corresponding to the audio instruction if a function call instruction of the interactive application to read the magnetic disk is detected to enter the Hook function for magnetic disk reading.

The server directly calls the audio data in the compressed state in the magnetic disk and does not need to compress an audio clip as in the existing technology, so as to reduce occupation of a processor in the server.

In S205, the server sends the audio data to the user equipment.

In S206, the server sends the audio instruction to the user equipment.

In S207, the server adds a sending record that the audio data is already sent to the user equipment in a data sending record.

In S208, the server stores the audio data corresponding to the audio instruction in a cache after the user equipment receives the audio data corresponding to the audio instruction sent by the server. The audio data may be audio data in a compressed state.

In an implementation, a data head of the audio data includes a Key value of an associated audio file of the audio data and an offset position and an offset length of the audio data in the audio file.

The storing the audio data corresponding to the audio instruction in the cache includes: determining, by the user equipment, the associated audio file according to the Key value of the audio file; determining, by the user equipment, a storage position of the audio data in the associated audio file according to the offset position and the offset length; and caching, by the user equipment, the audio data in the associated audio file according to the storage position.

S209 and 210 are the same as S105 and 106 in an embodiment corresponding to FIG. 2. S209 and 210 may be understood with reference to S105 and 106, which is not described herein.

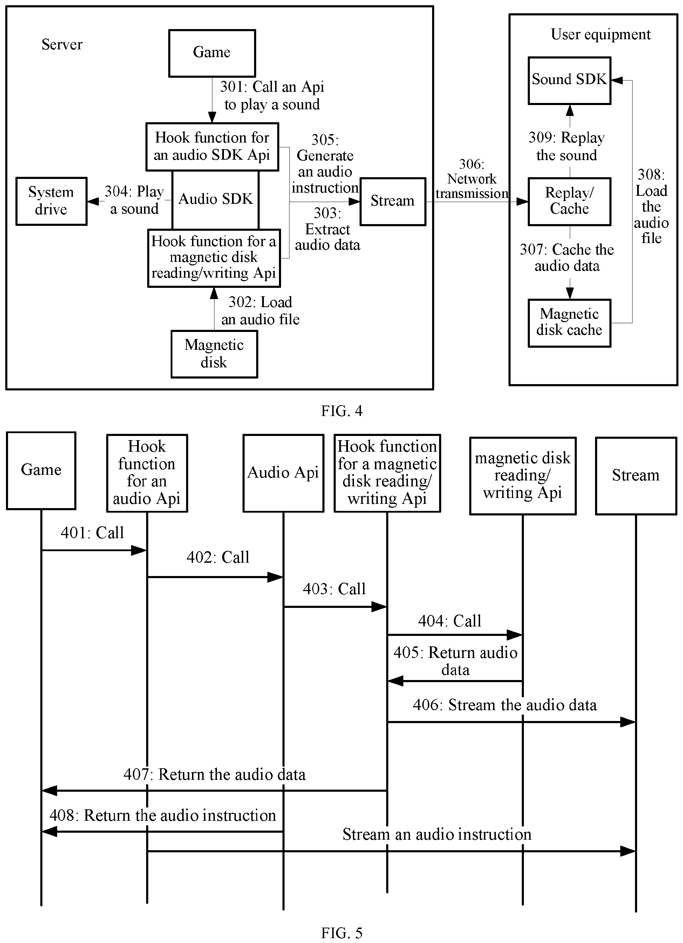

Referring to FIG. 4, the following further describes the audio processing method in the embodiments of the present disclosure with reference to a game scene.

As shown in FIG. 4, in view of software and hardware, the server may include several parts such as a system drive, a game, an audio SDK, a magnetic disk, a Hook function for the audio SDK Api, and a Hook function for a magnetic disk reading/writing Api.

In S301, Hook is performed on Api of audio SDK used in a game.

In S302, Hook is performed on Api of magnetic disk reading and writing related to an audio in the audio SDK used in the game to detect the loading of an audio file.

In S303, the audio data is streamed after being extracted, to be transmitted to user equipment.

In S304, a sound is played by using a system drive.

In S305, an audio instruction is generated and streamed, to be transmitted to the user equipment.

In S306, the audio data and the audio instruction are sequentially transmitted via the network to the user equipment.

In S307, the user equipment stores the audio data in a magnetic disk cache after receiving the audio data.

In S308, the user equipment loads the audio data from the magnetic disk cache after receiving the audio instruction.

In S309, the audio instruction is executed to replay the sound.

In the embodiments of the present disclosure, the server end relates to streaming of the audio data and the audio instruction. A streaming process may be understood by referring to FIG. 5.

In S401: the game enters the Hook function for the audio Api of this solution first when function call the Api of the audio SDK.

In S402, the Api of the audio SDK is called first in the Hook function for the audio Api.

In S403,the games enters the Hook function for magnetic disk reading if a current function call of the audio Api leads an interactive application to read a file on the magnetic disk.

In S404, the Api of the magnetic disk reading and writing is called in the Hook function for magnetic disk reading.

In S405, the Api of the magnetic disk reading and writing returns audio data.

In S406, the audio data is streamed to be sent to the user equipment.

In S407, the Hook function for magnetic disk reading returns the audio data to the game.

In S408, the audio Api returns the audio instruction to the game.

In this case, the sound may be played in the game according to the audio data and the audio instruction.

S409: the Hook function for the audio Api streams the audio instruction to send to the user equipment.

In this solution, whether data read by the audio SDK is new may be detected. If the data is new, the audio data is streamed to a Retrace end and a file name of the audio data is used as a Key value to update the reading information, such as an offset and the length, of the audio data. If the audio data is streamed before, the audio data is no longer streamed. Network traffic may be reduced.

At the server end, when the audio data is streamed, for example, the file name is always used as the Key value, which together with the offset and length of the audio data in an original file is used as a data head. In this case, at a user equipment end, data can be correctly written into a correct file and a correct position.

As shown in FIG. 5, for example, the audio data needed by the audio instruction may be streamed to the user equipment before the audio instruction. Therefore, when the audio replaying instruction is executed at the user equipment end, the needed audio data is always cached on the magnetic disk.

Data cached by the user equipment in this solution, for example, is the same with data used by the game at the server end, as well as a file code and the audio SDK. Therefore, once a piece of audio data is played for one time at the user equipment end and is cached, the server end no longer needs to stream the same music if hit in the cached data when an audio engine based on events used in the game mixes different music and triggers repeatedly played music.

In this disclosure, original audio data stored on the magnetic disk and used in the game is cached. The data may be compressed. Therefore, when being streamed, data read from the magnetic disk does not need to be compressed to stream, so as to reduce occupation of a processor in the server.

Apart from the cloud game system, the present disclosure may further be applied in a remote program desktop system, so as to reduce CPU occupation of the remote system and network traffic when playing streaming media.

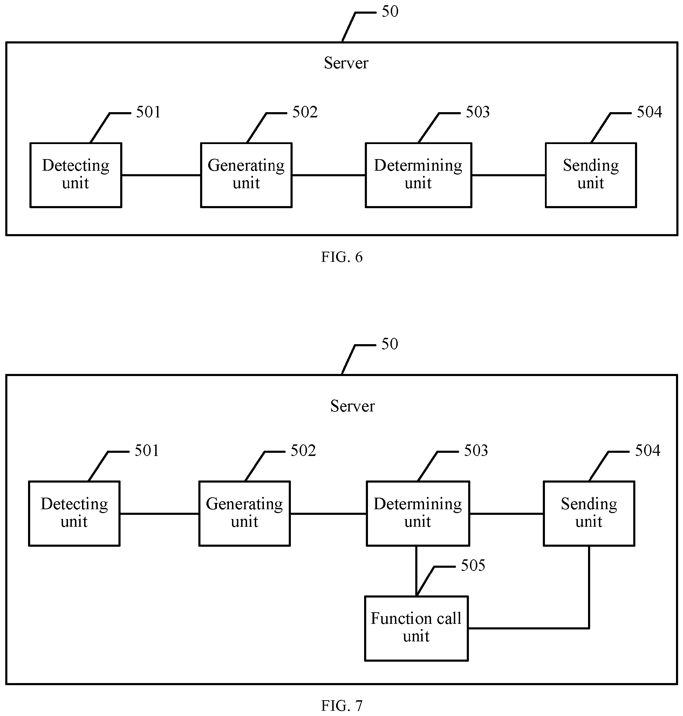

Referring to FIG. 6, the server 50 provided in the embodiments of the present disclosure is applied to a cloud interactive system. The cloud interactive system includes user equipment. An embodiment of the server includes the following units 501 to 504.

A detecting unit 501 is configured to detect a function call from an interactive application to an audio interface when running the interactive application.

A generating unit 502 is configured to generate, according to a type of the audio interface, an audio instruction corresponding to the type when the function call from the interactive application to the audio interface is detected.

A determining unit 503 is configured to determine whether there exists a sending record that audio data corresponding to the audio instruction generated by the generating unit 502 is already sent to the user equipment.

A sending unit 504 is configured to send the audio instruction to the user equipment if the determining unit 503 determines that the sending record exists, where the audio instruction is used to instruct the user equipment to use the cached audio data when executing the audio instruction.

In the existing technology, user equipment needs to play an audio clip sent by a server to implement playing an audio at a server end by the user equipment. Compared with that, the embodiments of the present disclosure provide a server. The server sends an audio instruction to the user equipment to implement playing the audio at the server end by the user equipment, so as to improve the playing quality of an audio at a user equipment end. In addition, the server merely sends the audio instruction to the user equipment when the server determines that there exists a sending record that audio data corresponding to the audio instruction is already sent to the user equipment, without repeatedly sending the audio data, reducing network traffic from the server to the user equipment.

Optionally, based on the embodiment corresponding to FIG. 6, referring to FIG. 7, in a first optional embodiment of the server provided in the embodiments of the present disclosure, the server further includes a function call unit 505.

The function call unit 505 is configured to call the audio data corresponding to the audio instruction when the determining unit 503 determines that the sending record does not exist.

The sending unit 504 is further configured to sequentially send the audio data called by the function call unit 505 and the audio instruction to the user equipment.

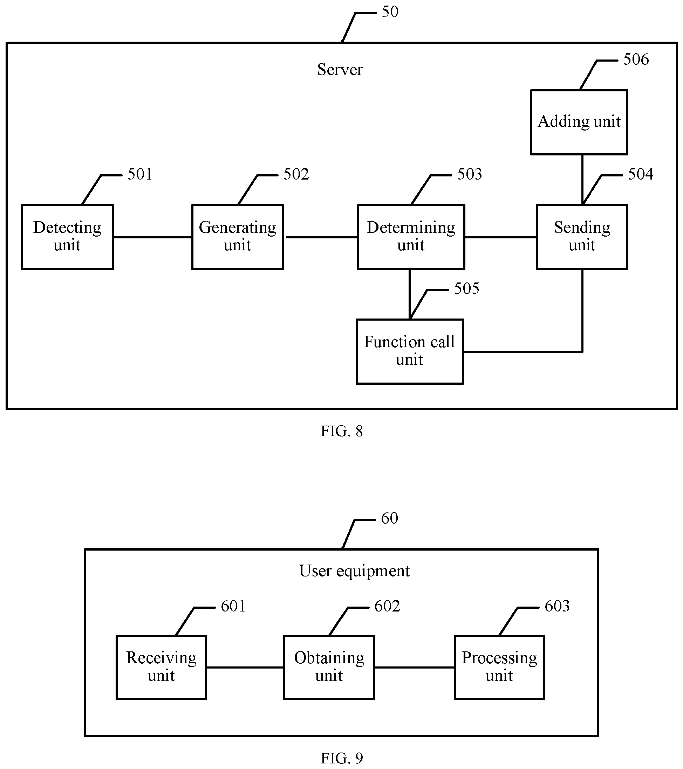

Optionally, based on the embodiment corresponding to FIG. 7, referring to FIG. 8, in a second optional embodiment of the server provided in the embodiments of the present disclosure, the server 50 further includes an adding unit 506.

The adding unit 506 is configured to add a sending record that the audio data is already sent to the user equipment in a data sending record after the sending unit 504 sends the audio data.

Optionally, the detecting unit 501 is configured to: detect the function call from the interactive application to the audio interface by using a Hook function for the audio interface; and determine the function call from the interactive application to the audio interface if a function call instruction of the interactive application to the audio interface is detected to enter the Hook function for the audio interface.

Optionally, the function call unit 505 is configured to use a Hook function for magnetic disk reading to call the audio data corresponding to the audio instruction; and call the audio data corresponding to the audio instruction if a function call instruction of the interactive application to read the magnetic disk is detected to enter the Hook function for magnetic disk reading.

Referring to FIG. 9, the user equipment 60 provided in the embodiments of the present disclosure is applied to a cloud interactive system. The cloud interactive system further includes a server. The user equipment 60 includes the following units 601 to 603.

A receiving unit 601 is configured to receive an audio instruction sent by the server.

An obtaining unit 602 is configured to obtain audio data corresponding to the audio instruction received by the receiving unit 601 from a cache.

A processing unit 603 is configured to use the cached audio data obtained by the obtaining unit 602 when executing the audio instruction.

In the existing technology, user equipment needs to play an audio clip sent by a server to implement playing an audio at a server end by the user equipment. Compared with that, the embodiments of the present disclosure provide user equipment. The user equipment may play an audio according to the audio instruction, so as to improve the playing quality of the audio. In addition, audio data may be cached so that the server does not need to repeatedly send same audio data, reducing network traffic from the server to the user equipment.

Optionally, based on the embodiment corresponding to FIG. 9, in a first optional embodiment of the user equipment provided in the embodiments of the present disclosure, the receiving unit 601 is further configured to receive the audio data corresponding to the audio instruction sent by the server, wherein the audio data is sent when the server determines that there does not exist a sending record that the audio data corresponding to the audio instruction is already sent to the user equipment. The processing unit 603 is further configured to store the audio data corresponding to the audio instruction in the cache.

Optionally, based on the corresponding embodiment corresponding to FIG. 9 or the first optional embodiment, in a second optional embodiment of the user equipment provided in the embodiments of the present disclosure, the processing unit 603 is further configured to: when a data head of the audio data comprises a Key value of an associated audio file of the audio data and an offset position and an offset length of the audio data in the audio file, determine the associated audio file according to the Key value of the audio file, determine a storage position of the audio data in the associated audio file according to the offset position and the offset length, and cache the audio data in the associated audio file according to the storage position.

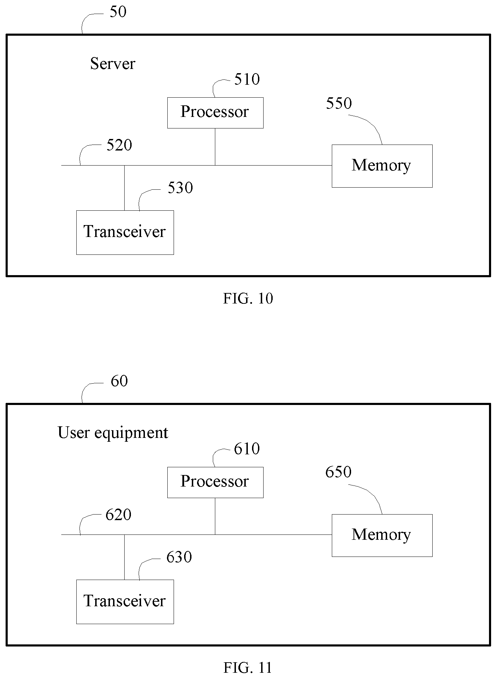

FIG. 10 is a schematic structural diagram of a server 50 according to an embodiment of the present disclosure. The server 50 is applied to a cloud interactive system. The cloud interactive system includes user equipment and a server. The server 50 includes a processor 510, a memory 550, and a transceiver 530. The memory 550 may include a read-only memory and a random access memory and provides operating instructions and data to the processor 510. A part of the memory 550 may further include a non-volatile random access memory (NVRAM).

In some implementations, the memory 550 stores the following elements: executable modules or data structures, or a subset thereof, or an extension set thereof.

In the embodiments of the present disclosure, the processor 510 calls the operation instructions (the operation instructions may be stored in an operating system) stored in the memory 550.

The processor 510 is configured to detect a function call from an interactive application to an audio interface, generate, according to a type of the audio interface, an audio instruction corresponding to the type when the function call from the interactive application to the audio is detected, and determine whether there exists a sending record that audio data corresponding to the audio instruction generated by the generating unit is already sent to the user equipment.

The transceiver 530 is configured to send the audio instruction to the user equipment if the sending record exists, where the audio instruction is used to instruct the user equipment to use the cached audio data when executing the audio instruction.

In the existing technology, user equipment needs to play an audio clip sent by a server to implement playing an audio at a server end by the user equipment. Compared with that, the embodiments of the present disclosure provide a server. The server sends an audio instruction to the user equipment to implement playing the audio at the server end by the user equipment, so as to improve the playing quality of an audio at a user equipment end. In addition, the server merely sends the audio instruction to the user equipment when the server determines that there exists a sending record that audio data corresponding to the audio instruction is already sent to the user equipment, without repeatedly sending the audio data, reducing network traffic from the server to the user equipment.

The processor 510 controls an operation of the server 50. The processor 510 may further be referred to as a central processing unit (CPU). The memory 550 may include a read-only memory and a random access memory, and provides instructions and data to the processor 510. A part of the memory 550 may further include a non-volatile random access memory (NVRAM). In specific application, components of the server 50 are coupled together by using a bus system 520, where in addition to a data bus, the bus system 520 may include a power bus, a control bus, a status signal bus, and the like. However, for clear description, various types of buses in the figure are marked as the bus system 520.

The method disclosed in the foregoing embodiment of the present disclosure may be applied to the processor 510, or be implemented by the processor 510. The processor 510 may be an integrated circuit chip and has a signal processing capability. In an implementation process, each step of the foregoing method may be implemented by a hardware integrated logic circuit in the processor 510 or by an instruction in a software form. The foregoing processor 510 may be a general purpose processor, a digital signal processor (DSP), an application-specific integrated circuit (ASIC), a field programmable gate array (FPGA), or other programmable logical device, discrete gate or transistor logical device, or discrete hardware component. The processor 230 may implement or execute methods, steps and logical block diagrams disclosed in the embodiments of the present disclosure. The general purpose processor may be a microprocessor or the processor may be any conventional processor and the like. Steps of the methods disclosed with reference to the embodiments of the present disclosure may be directly executed and completed by means of a hardware decoding processor, or may be executed and completed by using a combination of hardware and software modules in the decoding processor. The software module may be located in a mature storage medium in the field, such as a random access memory, a flash memory, a read-only memory, a programmable read-only memory, an electrically-erasable programmable memory, or a register. The storage medium is located in the memory 550, and the processor 510 reads information in the memory 550 and completes the steps in the foregoing methods in combination with hardware of the processor.

Optionally, the processor 510 is further configured to call the audio data corresponding to the audio instruction if the sending record does not exist.

The transceiver 530 is further configured to sequentially send the audio data and the audio instruction to the user equipment.

Optionally, the processor 510 is further configured to add a sending record that the audio data is already sent to the user equipment in a data sending record.

Optionally, the processor 510 is configured to detect the function call from the interactive application to the audio interface by using a Hook function for the audio interface, and determine the function call from the interactive application to the audio interface if a function call instruction of the interactive application to the audio interface is detected to enter the Hook function for the audio interface.

Optionally, the processor 510 is configured to use a Hook function for magnetic disk reading to call the audio data corresponding to the audio instruction, and call the audio data corresponding to the audio instruction if a function call instruction of the interactive application to read the magnetic disk is detected to enter the Hook function for magnetic disk reading.

The foregoing server 50 may be understood with reference to related descriptions in FIG. 1 to FIG. 5, which is not described herein.

FIG. 11 is a schematic structural diagram of user equipment 60 according to an embodiment of the present disclosure. The user equipment 60 is applied to a cloud interactive system. The cloud interactive system includes user equipment and a server. The user equipment 60 includes a processor 610, a memory 650, and a transceiver 630. The memory 650 may include a read-only memory and a random access memory and provides operating instructions and data to the processor 610. A part of the memory 650 may further include a non-volatile random access memory (NVRAM).

In some implementations, the memory 650 stores the following elements: executable modules or data structures, or a subset thereof, or an extension set thereof.

In the embodiments of the present disclosure, the processor 610 calls the operation instructions (the operation instructions may be stored in an operating system) stored in the memory 650.

The transceiver 630 is configured to receive an audio instruction sent by the server.

The processor 610 is configured to obtain audio data corresponding to the audio instruction from a cache and use the cached audio data to perform corresponding audio operations when executing the audio instruction.

In the existing technology, user equipment needs to play an audio clip sent by a server to implement playing an audio at a server end by the user equipment. Compared with that, the embodiments of the present disclosure provide user equipment. The user equipment may play an audio according to the audio instruction, so as to improve the playing quality of the audio. In addition, audio data may be cached and the server does not need to repeatedly send same audio data, reducing network traffic from the server to the user equipment.

The processor 610 controls an operation of the user equipment 60. The processor 610 may further be referred to as a central processing unit (CPU). The memory 650 may include a read-only memory and a random access memory, and provides instructions and data to the processor 610. A part of the memory 650 may further include a non-volatile random access memory (NVRAM). In specific application, components of the user equipment 60 are coupled together by using a bus system 620, where in addition to a data bus, the bus system 620 may include a power bus, a control bus, a status signal bus, and the like. However, for clear description, various types of buses in the figure are marked as the bus system 620.

The method disclosed in the foregoing embodiment of the present disclosure may be applied to the processor 610, or be implemented by the processor 610. The processor 610 may be an integrated circuit chip and has a signal processing capability. In an implementation process, each step of the foregoing method may be implemented by a hardware integrated logic circuit in the processor 610 or by an instruction in a software form. The foregoing processor 610 may be a general purpose processor, a digital signal processor (DSP), an application-specific integrated circuit (ASIC), a field programmable gate array (FPGA), or another programmable logical device, discrete gate or transistor logical device, or discrete hardware component. The processor 230 may implement or execute methods, steps and logical block diagrams disclosed in the embodiments of the present disclosure. The general purpose processor may be a microprocessor or the processor may be any conventional processor and the like. Steps of the methods disclosed with reference to the embodiments of the present disclosure may be directly executed and completed by means of a hardware decoding processor, or may be executed and completed by using a combination of hardware and software modules in the decoding processor. The software module may be located in a mature storage medium in the field, such as a random access memory, a flash memory, a read-only memory, a programmable read-only memory, an electrically-erasable programmable memory, or a register. The storage medium is located in the memory 650, and the processor 610 reads information in the memory 650 and completes the steps in the foregoing methods in combination with hardware of the processor.

Optionally, the transceiver 630 is further configured to receive the audio data corresponding to the audio instruction sent by the server, where the audio data is sent when the server determines there does not exist a sending record that the audio data corresponding to the audio instruction is already sent to the user equipment.

The processor 610 is further configured to: when a data head of the audio data includes a Key value of an associated audio file of the audio data and an offset position and an offset length of the audio data in the audio file, determine the associated audio file according to the Key value of the audio file, determine a storage position of the audio data in the associated audio file according to the offset position and the offset length, and cache the audio data in the associated audio file according to the storage position.

The foregoing user equipment 60 may be understood with reference to related descriptions in FIG. 1 to FIG. 5, which is not described herein.

The embodiments of the present disclosure further provide a cloud interactive system. The cloud interactive system includes user equipment and a server. The server is configured to: detect a function call from an interactive application to an audio interface, and generate, according to a type of the audio interface, an audio instruction corresponding to the type when the function call from the interactive application to the audio interface is detected; determine whether there exists a sending record that audio data corresponding to the audio instruction is already sent to the user equipment; and send the audio instruction to the user equipment if the sending record exists, where the audio instruction is used to instruct the user equipment to use the cached audio data when executing the audio instruction. The user equipment is configured to: receive an audio instruction sent by the server, obtain audio data corresponding to the audio instruction from a cache, and use the cached audio data when executing the audio instruction.

In the embodiment, for example, when the server determines there does not exist the sending record that the audio data corresponding to the audio instruction is already sent to the user equipment, the server is further configured to: call the audio data corresponding to the audio instruction, and sequentially send the audio data and the audio instruction to the user equipment. In this case, for example, the user equipment is further configured to: receive the audio data corresponding to the audio instruction sent by the server. For example, the user equipment may receive the audio data before receiving the audio instruction sent by the server, and the user equipment caches the audio data corresponding to the audio instruction. In view of this, the user equipment may continuously update the audio data being cached, so as to improve the playing quality of an audio and reduce network traffic from the server to the user equipment. The audio data may be in a compressed state.

In the foregoing embodiment, for example, when the server sends the audio data to the user equipment, the server may add a sending record that the audio data is already sent to the user equipment in a data sending record. In this way, the server may conveniently determine whether the audio data is already sent to the user equipment, so as to avoid repeatedly sending same audio data and reducing the network traffic from the server to the user equipment.

In the foregoing embodiment, for example, a data head of the audio data sent to the user equipment by the server, for example, may include a Key value of an associated audio file of the audio data and an offset position and an offset length of the audio data in the audio file. For example, the user equipment determines the associated audio file according to the Key value of the audio file, determines a storage position of the audio data in the associated audio file according to the offset position and the offset length, and caches the audio data in the associated audio file according to the storage position. The audio data may be accurately cached by accurately determining the associated audio file of the audio data and a position of the audio data in associated audio file, so as to ensure the accuracy of audio playing.

The cloud interactive system provided in the embodiments of the present disclosure may be understood with reference to related descriptions in FIG. 1 to FIG. 5, which is not described herein.

A person of ordinary skill in the art may understand that all or some of the steps of the methods in the embodiments may be implemented by a program instructing relevant hardware. The program may be stored in a computer-readable storage medium. The storage medium may include: a ROM, a RAM, a magnetic disk, or an optical disc.

The audio processing method, the server, and the user equipment provided in the embodiments of the present disclosure are described in detail in the foregoing, and the text applies specific examples to describe the principle and implementation manners of the present disclosure. The foregoing descriptions of the embodiments are only intended to help understand the method and core idea of the present disclosure.

## Claims

1. An audio processing method, applied to a cloud interactive system, the cloud interactive system comprising a user equipment and a server, and the method comprising:
detecting, by the server, a function call from an interactive application to an audio interface when running the interactive application;
generating, by the server, according to a type of the audio interface, an audio instruction corresponding to the type when the function call from the interactive application to the audio interface is detected;
when the server determines that the audio instruction needs audio data according to the type of the audio interface, determining, by the server, whether there exists a sending record that the audio data corresponding to the audio instruction is already sent to the user equipment; and
sending, by the server, the audio instruction to the user equipment if the sending record exists, wherein the audio instruction is used to instruct the user equipment to use the cached audio data when executing the audio instruction;
calling, by the server, the audio data corresponding to the audio instruction if the sending record does not exist, and sequentially sending the audio data and the audio instruction to the user equipment.

2. The method according to claim 1, further comprising:
adding, by the server, the sending record that the audio data is already sent to the user equipment in a data sending record.

3. The method according to claim 1 or 2, wherein the detecting a function call from an interactive application to an audio interface comprises:
detecting, by the server, the function call from the interactive application to the audio interface by using a Hook function for the audio interface; and
determining the function call from the interactive application to the audio interface if a function call instruction of the interactive application to the audio interface is detected to enter the Hook function for the audio interface.

4. The method according to claim 1, wherein the calling the audio data corresponding to the audio instruction comprises:
using, by the server, a Hook function for magnetic disk reading to call the audio data corresponding to the audio instruction; and
calling the audio data corresponding to the audio instruction if a function call instruction of the interactive application to read the magnetic disk is detected to enter the Hook function for magnetic disk reading.

5. An audio processing method, applied to a cloud interactive system, the cloud interactive system comprising a user equipment and a server, and the method comprising:
receiving, by the user equipment, an audio instruction sent by the server, wherein the server detects a function call from an interactive application to an audio interface when running the interactive application, and generates, according to a type of the audio interface, the audio instruction corresponding to the type when the function call from the interactive application to the audio interface is detected; when the server determines that the audio instruction needs audio data according to the type of the audio interface, the server determines whether there exists a sending record that the audio data corresponding to the audio instruction is already sent to the user equipment, and sends the audio instruction to the user equipment if the sending record exists;
obtaining, by the user equipment, audio data corresponding to the audio instruction from a cache; and
using, by the user equipment, the cached audio data when executing the audio instruction;
receiving, by the user equipment, the audio data corresponding to the audio instruction sent by the server before receiving the audio instruction, wherein the server determines that the sending record does not exist and calls the audio data corresponding to the audio instruction.

6. The method according to claim 5, wherein before the receiving an audio instruction sent by the server, the method further comprises:
storing, by the user equipment, the audio data corresponding to the audio instruction in the cache.

7. The method according to claim 6, wherein a data head of the audio data comprises a Key value of an associated audio file of the audio data and an offset position and an offset length of the audio data in the audio file; and
the storing the audio data corresponding to the audio instruction in the cache comprises:
determining, by the user equipment, the associated audio file according to the Key value of the audio file;
determining, by the user equipment, a storage position of the audio data in the associated audio file according to the offset position and the offset length; and
caching, by the user equipment, the audio data in the associated audio file according to the storage position.

8. A server, applied to a cloud interactive system, the cloud interactive system further comprising a user equipment, and the server comprising:
a detecting unit, configured to detect a function call from an interactive application to an audio interface when running the interactive application;
a generating unit, configured to generate, according to a type of the audio interface, an audio instruction corresponding to the type when the function call from the interactive application to the audio is detected;
a determining unit, configured to when the server determines that the audio instruction needs audio data according to the type of the audio interface, determine whether there exists a sending record that the audio data corresponding to the audio instruction generated by the generating unit is already sent to the user equipment; and
a sending unit, configured to send the audio instruction to the user equipment if the determining unit determines that the sending record exists, wherein the audio instruction is used to instruct the user equipment to use the cached audio data when executing the audio instruction;
a function call unit, configured to call the audio data corresponding to the audio instruction when the determining unit determines that the sending record does not exist; wherein the sending unit is further configured to sequentially send the audio data called by the function call unit and the audio instruction to the user equipment.

9. The server according to claim 8, further comprising:
an adding unit, configured to add a sending record that the audio data is already sent to the user equipment in a data sending record after the sending unit sends the audio data.

10. The server according to claim 8 or 9, wherein
the detecting unit is configured to:
detect the function call from the interactive application to the audio interface by using a Hook function for the audio interface; and
determine the function call from the interactive application to the audio interface if a function call instruction of the interactive application to the audio interface is detected to enter the Hook function for the audio interface.

11. The server according to any one of claims 8 to 10, wherein
the function call unit is configured to:
use a Hook function for magnetic disk reading to call the audio data corresponding to the audio instruction; and
call the audio data corresponding to the audio instruction if a function call instruction of the interactive application to read the magnetic disk is detected to enter the Hook function for magnetic disk reading.

12. A user equipment, applied to a cloud interactive system, the cloud interactive system further comprising a server, and the user equipment comprising:
a receiving unit, configured to receive an audio instruction sent by the server, wherein the server detects a function call from an interactive application to an audio interface when running the interactive application, and generates, according to a type of the audio interface, the audio instruction corresponding to the type when the function call from the interactive application to the audio interface is detected; when the server determines that the audio instruction needs audio data according to the type of the audio interface, the server determines whether there exists a sending record that the audio data corresponding to the audio instruction is already sent to the user equipment, and sends the audio instruction to the user equipment if the sending record exists;
an obtaining unit, configured to obtain audio data corresponding to the audio instruction received by the receiving unit from a cache; and
a processing unit, configured to use the audio data obtained by the obtaining unit when executing the audio instruction;
wherein the receiving unit is further configured to receive the audio data corresponding to the audio instruction sent by the server before receiving the audio instruction, wherein the server determines that the sending record does not exist and calls the audio data corresponding to the audio instruction.

13. A cloud interactive system, comprising a user equipment and a server,
the server being configured to:
detect a function call from an interactive application to an audio interface when running the interactive application, and generate, according to a type of the audio interface, an audio instruction corresponding to the type when the function call from the interactive application to the audio interface is detected;
when the server determines that the audio instruction needs audio data according to the type of the audio interface, determine whether there exists a sending record that the audio data corresponding to the audio instruction is already sent to the user equipment; and
send the audio instruction to the user equipment if the sending record exists, wherein the audio instruction is used to instruct the user equipment to use the cached audio data when executing the audio instruction;
call the audio data corresponding to the audio instruction if the sending record does not exist, and sequentially sending the audio data and the audio instruction to the user equipment; and
the user equipment being configured to:
receive the audio instruction sent by the server;
obtain the audio data corresponding to the audio instruction from a cache; and
use the cached audio data when executing the audio instruction;
receive the audio data corresponding to the audio instruction sent by the server before receiving the audio instruction.

## Patentansprüche

1. Audioverarbeitungsverfahren, angewandt auf ein interaktives Cloud-System, wobei das interaktive Cloud-System eine Benutzerausrüstung und einen Server umfasst, wobei das Verfahren Folgendes umfasst:
Erkennen eines Funktionsaufrufs von einer interaktiven Anwendung an eine Audioschnittstelle durch den Server, wenn die interaktive Anwendung läuft,
gemäß einem Typ der Audioschnittstelle Erzeugen eines Audiobefehls, der dem Typ entspricht, durch den Server, wenn der Funktionsaufruf von der interaktiven Anwendung an die Audioschnittstelle erkannt wird,
wenn der Server bestimmt, dass der Audiobefehl gemäß dem Typ der Audioschnittstelle Audiodaten benötigt, Bestimmen durch den Server, ob eine Sendeaufzeichnung existiert, dass die Audiodaten, die dem Audiobefehl entsprechen, bereits an die Benutzerausrüstung gesendet wurden, und
Senden des Audiobefehls an die Benutzerausrüstung durch den Server, wenn die Sendeaufzeichnung existiert, wobei der Audiobefehl dazu verwendet wird, die Benutzerausrüstung anzuweisen, beim Ausführen des Audiobefehls die im Cache gespeicherten Audiodaten zu verwenden,
Aufrufen der Audiodaten, die dem Audiobefehl entsprechen, durch den Server, wenn keine Sendeaufzeichnung existiert, und schrittweises Senden der Audiodaten und des Audiobefehls an die Benutzerausrüstung.

2. Verfahren nach Anspruch 1, ferner Folgendes umfassend:
Hinzufügen der Sendeaufzeichnung, dass die Audiodaten bereits an die Benutzerausrüstung gesendet wurden, zu einer Datensendeaufzeichnung durch den Server.

3. Verfahren nach Anspruch 1 oder 2, wobei das Erkennen eines Funktionsaufrufs von einer interaktiven Anwendung an eine Audioschnittstelle Folgendes umfasst:
Erkennen des Funktionsaufrufs von der interaktiven Anwendung an die Audioschnittstelle durch den Server mit Hilfe einer Hookfunktion für die Audioschnittstelle und
Bestimmen des Funktionsaufrufs von der interaktiven Anwendung an die Audioschnittstelle, wenn ein Funktionsaufrufbefehl der interaktiven Anwendung an die Audioschnittstelle erkannt wird, um in die Hookfunktion für die Audioschnittstelle einzutreten.

4. Verfahren nach Anspruch 1, wobei das Aufrufen der Audiodaten, die dem Audiobefehl entsprechen, Folgendes umfasst:
Verwenden einer Hookfunktion für das Lesen von Magnetplatten durch den Server, um die Audiodaten, die dem Audiobefehl entsprechen, aufzurufen, und
Aufrufen der Audiodaten, die dem Audiobefehl entsprechen, wenn ein Funktionsaufrufbefehl der interaktiven Anwendung zum Lesen der Magnetplatte erkannt wird, um in die Hookfunktion zum Lesen von Magnetplatten einzutreten.

5. Audioverarbeitungsverfahren, angewandt auf ein interaktives Cloud-System, wobei das interaktive Cloud-System eine Benutzerausrüstung und einen Server umfasst, wobei das Verfahren Folgendes umfasst:
Empfangen eines von dem Server gesendeten Audiobefehls durch die Benutzerausrüstung, wobei der Server einen Funktionsaufruf von einer interaktiven Anwendung an eine Audioschnittstelle erkennt, wenn die interaktive Anwendung läuft, und gemäß einem Typ der Audioschnittstelle den Audiobefehl erzeugt, der dem Typ entspricht, wenn der Funktionsaufruf von der interaktiven Anwendung an die Audioschnittstelle erkannt wird, wenn der Server bestimmt, dass der Audiobefehl Audiodaten gemäß dem Typ der Audioschnittstelle benötigt, bestimmt der Server, ob eine Sendeaufzeichnung existiert, dass die Audiodaten, die dem Audiobefehl entsprechen, bereits an die Benutzerausrüstung gesendet wurden, und sendet den Audiobefehl an die Benutzerausrüstung, wenn die Sendeaufzeichnung existiert,
Beziehen von Audiodaten, die dem Audiobefehl entsprechen, aus einem Cache, durch die Benutzerausrüstung und
Verwenden der im Cache gespeicherten Audiodaten beim Ausführen des Audiobefehls durch die Benutzerausrüstung,
Empfangen der vom Server gesendeten Audiodaten, die dem Audiobefehl entsprechen, durch die Benutzerausrüstung vor dem Empfangen des Audiobefehls, wobei der Server bestimmt, dass keine Sendeaufzeichnung existiert, und die Audiodaten, die dem Audiobefehl entsprechen, aufruft.

6. Verfahren nach Anspruch 5, wobei das Verfahren vor dem Empfangen eines Audiobefehls, der von dem Server gesendet wird, Folgendes umfasst:
Speichern der Audiodaten, die dem Audiobefehl entsprechen, in dem Cache durch die Benutzerausrüstung.

7. Verfahren nach Anspruch 6, wobei ein Datenkopf der Audiodaten einen Schlüsselwert einer zugeordneten Audiodatei der Audiodaten und eine Versatzposition einer Versatzlänge der Audiodaten in der Audiodatei umfasst, und
das Speichern der Audiodaten, die dem Audiobefehl entsprechen, in dem Cache Folgendes umfasst:
Bestimmen der zugeordneten Audiodatei gemäß dem Schlüsselwert der Audiodatei durch die Benutzerausrüstung,
Bestimmen einer Speicherposition der Audiodaten in der zugeordneten Audiodatei gemäß der Versatzposition und der Versatzlänge durch die Benutzerausrüstung und
Im-Cache-Speichern der Audiodaten in der zugeordneten Audiodatei gemäß der Speicherposition durch die Benutzerausrüstung.

8. Server, verwendet in einem interaktiven Cloud-System, wobei das interaktive Cloud-System ferner eine Benutzerausrüstung umfasst und der Server Folgendes umfasst:
eine Erkennungseinheit, die dafür konfiguriert ist, einen Funktionsaufruf von einer interaktiven Anwendung an eine Audioschnittstelle, wenn die interaktive Anwendung läuft, zu erkennen,
eine Erzeugungseinheit, die dafür konfiguriert ist, gemäß einem Typ der Audioschnittstelle einen Audiobefehl zu erzeugen, der dem Typ entspricht, wenn der Funktionsaufruf von der interaktiven Anwendung an die Audioschnittstelle erkannt wird,
eine Bestimmungseinheit, die dafür konfiguriert ist, wenn der Server bestimmt, dass der Audiobefehl gemäß dem Typ der Audioschnittstelle Audiodaten benötigt, zu bestimmen, ob eine Sendeaufzeichnung existiert, dass die Audiodaten, die dem Audiobefehl entsprechen, bereits an die Benutzerausrüstung gesendet wurden, und
eine Sendeeinheit, die dafür konfiguriert ist, den Audiobefehl an die Benutzerausrüstung zu senden, wenn die Bestimmungseinheit bestimmt, dass die Sendeaufzeichnung existiert, wobei der Audiobefehl dazu verwendet wird, die Benutzerausrüstung anzuweisen, beim Ausführen des Audiobefehls die im Cache gespeicherten Audiodaten zu verwenden,
eine Funktionsaufrufeinheit, die dafür konfiguriert ist, die Audiodaten aufzurufen, die dem Audiobefehl entsprechen, wenn die Bestimmungseinheit bestimmt, dass keine Sendeaufzeichnung existiert, wobei die Sendeeinheit ferner dafür konfiguriert ist, die durch die Funktionsaufrufeinheit aufgerufenen Audiodaten und den Audiobefehl schrittweise an die Benutzerausrüstung zu senden.

9. Server nach Anspruch 8, ferner Folgendes umfassend:
eine Hinzufügeeinheit, die dafür konfiguriert ist, zu einer Datensendeaufzeichnung eine Sendeaufzeichnung hinzuzufügen, dass die Audiodaten bereits an die Benutzerausrüstung gesendet wurden, nachdem die Sendeeinheit die Audiodaten gesendet hat.

10. Server nach Anspruch 8 oder 9, wobei
die Erkennungseinheit für Folgendes konfiguriert ist:
Erkennen des Funktionsaufrufs von der interaktiven Anwendung an die Audioschnittstelle mit Hilfe einer Hookfunktion für die Audioschnittstelle und
Bestimmen des Funktionsaufrufs von der interaktiven Anwendung an die Audioschnittstelle, wenn ein Funktionsaufrufbefehl der interaktiven Anwendung an die Audioschnittstelle erkannt wird, um in die Hookfunktion für die Audioschnittstelle einzutreten.

11. Server nach einem der Ansprüche 8 bis 10, wobei die Funktionsaufrufeinheit für Folgendes konfiguriert ist:
Verwenden einer Hookfunktion für das Lesen von Magnetplatten, um die Audiodaten, die dem Audiobefehl entsprechen, aufzurufen, und
Aufrufen der Audiodaten, die dem Audiobefehl entsprechen, wenn ein Funktionsaufrufbefehl der interaktiven Anwendung zum Lesen der Magnetplatte erkannt wird, um in die Hookfunktion zum Lesen von Magnetplatten einzutreten.

12. Benutzerausrüstung, verwendet in einem interaktiven Cloud-System, wobei das interaktive Cloud-System ferner einen Server umfasst und die Benutzerausrüstung Folgendes umfasst:
eine Empfangseinheit, die dafür konfiguriert ist, einen von dem Server gesendeten Audiobefehl zu empfangen, wobei der Server einen Funktionsaufruf von einer interaktiven Anwendung an eine Audioschnittstelle erkennt, wenn die interaktive Anwendung läuft, und gemäß einem Typ der Audioschnittstelle den Audiobefehl erzeugt, der dem Typ entspricht, wenn der Funktionsaufruf von der interaktiven Anwendung an die Audioschnittstelle erkannt wird, wenn der Server bestimmt, dass der Audiobefehl Audiodaten gemäß dem Typ der Audioschnittstelle benötigt, bestimmt der Server, ob eine Sendeaufzeichnung existiert, dass die Audiodaten, die dem Audiobefehl entsprechen, bereits an die Benutzerausrüstung gesendet wurden, und sendet den Audiobefehl an die Benutzerausrüstung, wenn die Sendeaufzeichnung existiert,
eine Bezugseinheit, die dafür konfiguriert ist, Audiodaten, die dem Audiobefehl entsprechen, der von der Empfangseinheit empfangen wurde, aus einem Cache zu beziehen, und
eine Verarbeitungseinheit, die dafür konfiguriert ist, die durch die Bezugseinheit bezogenen Audiodaten beim Ausführen des Audiobefehls zu verwenden,
wobei die Empfangseinheit ferner dafür konfiguriert ist, vor dem Empfangen des Audiobefehls vom Server gesendete Audiodaten zu empfangen, die dem Audiobefehl entsprechen, wobei der Server bestimmt, dass keine Sendeaufzeichnung existiert, und die Audiodaten, die dem Audiobefehl entsprechen, aufruft.

13. Interaktives Cloud-System, eine Benutzerausrüstung und einen Server umfassend,
wobei der Server für Folgendes konfiguriert ist:
Erkennen eines Funktionsaufrufs von einer interaktiven Anwendung an eine Audioschnittstelle, wenn die interaktive Anwendung läuft, und gemäß einem Typ der Audioschnittstelle Erzeugen eines Audiobefehls, der dem Typ entspricht, wenn der Funktionsaufruf von der interaktiven Anwendung an die Audioschnittstelle erkannt wird,
wenn der Server bestimmt, dass der Audiobefehl gemäß dem Typ der Audioschnittstelle Audiodaten benötigt, Bestimmen, ob eine Sendeaufzeichnung existiert, dass die Audiodaten, die dem Audiobefehl entsprechen, bereits an die Benutzerausrüstung gesendet wurden, und
Senden des Audiobefehls an die Benutzerausrüstung, wenn die Sendeaufzeichnung existiert, wobei der Audiobefehl dazu verwendet wird, die Benutzerausrüstung anzuweisen, beim Ausführen des Audiobefehls die im Cache gespeicherten Audiodaten zu verwenden,
Aufrufen der Audiodaten, die dem Audiobefehl entsprechen, wenn keine Sendeaufzeichnung existiert, und schrittweises Senden der Audiodaten und des Audiobefehls an die Benutzerausrüstung und
die Benutzerausrüstung für Folgendes konfiguriert ist:
Empfangen eines von dem Server gesendeten Audiobefehls
Beziehen der Audiodaten, die dem Audiobefehl entsprechen, aus einem Cache, und
Verwenden der im Cache gespeicherten Audiodaten beim Ausführen des Audiobefehls,
Empfangen der vom Server gesendeten Audiodaten, die dem Audiobefehl entsprechen, vor dem Empfangen des Audiobefehls.

## Revendications

1. Procédé de traitement audio appliqué à un système interactif de cloud, le système interactif de cloud comprenant un équipement d'utilisateur et un serveur, et le procédé comprenant :
la détection, par le serveur, d'un appel de fonction d'une application interactive vers une interface audio lors de l'exécution de l'application interactive ;
la génération, par le serveur, en fonction d'un type de l'interface audio, d'une instruction audio correspondant au type lorsque l'appel de fonction de l'application interactive vers l'interface audio est détecté ;
lorsque le serveur détermine que l'instruction audio a besoin de données audio en fonction du type de l'interface audio, la détermination, par le serveur, s'il existe un enregistrement d'envoi en ce que les données audio correspondant à l'instruction audio sont déjà envoyées à l'équipement d'utilisateur ; et
l'envoi, par le serveur, de l'instruction audio à l'équipement d'utilisateur si l'enregistrement d'envoi existe, dans lequel l'instruction audio est utilisée pour instruire l'équipement d'utilisateur d'utiliser les données audio mises en mémoire cache lors de l'exécution de l'instruction audio ;
l'appel, par le serveur, des données audio correspondant à l'instruction audio si l'enregistrement d'envoi n'existe pas, et l'envoi de manière séquentielle des données audio et de l'instruction audio à l'équipement d'utilisateur.

2. Procédé selon la revendication 1, comprenant en outre :
l'ajout, par le serveur, de l'enregistrement d'envoi en ce que les données audio sont déjà envoyées à l'équipement d'utilisateur dans un enregistrement d'envoi de données.

3. Procédé selon la revendication 1 ou 2, dans lequel la détection d'un appel de fonction d'une application interactive vers une interface audio comprend :
la détection, par le serveur, de l'appel de fonction de l'application interactive vers l'interface audio en utilisant une fonction Hook pour l'interface audio ; et
la détermination de l'appel de fonction de l'application interactive vers l'interface audio si une instruction d'appel de fonction de l'application interactive vers l'interface audio est détectée comme entrant la fonction Hook pour l'interface audio.

4. Procédé selon la revendication 1, dans lequel l'appel des données audio correspondant à l'instruction audio comprend :
l'utilisation, par le serveur, d'une fonction Hook pour la lecture de disque magnétique pour appeler les données audio correspondant à l'instruction audio ; et
l'appel des données audio correspondant à l'instruction audio si une instruction d'appel de fonction de l'application interactive pour lire le disque magnétique est détectée comme entrant la fonction Hook pour la lecture de disque magnétique.

5. Procédé de traitement audio appliqué à un système interactif de cloud, le système interactif de cloud comprenant un équipement d'utilisateur et un serveur, et le procédé comprenant :
la réception, par l'équipement d'utilisateur, d'une instruction audio envoyée par le serveur, dans lequel le serveur détecte un appel de fonction d'une application interactive vers une interface audio lors de l'exécution de l'application interactive et génère, en fonction d'un type de l'interface audio, l'instruction audio correspondant au type lorsque l'appel de fonction de l'application interactive vers l'interface audio est détecté ; lorsque le serveur détermine que l'instruction audio a besoin de données audio en fonction du type de l'interface audio, le serveur détermine s'il existe un enregistrement d'envoi en ce que les données audio correspondant à l'instruction audio sont déjà envoyées à l'équipement d'utilisateur, et envoie l'instruction audio à l'équipement d'utilisateur si l'enregistrement d'envoi existe ;
l'obtention, par l'équipement d'utilisateur, de données audio correspondant à l'instruction audio à partir d'une mémoire cache ; et
l'utilisation, par l'équipement d'utilisateur, des données audio mises en mémoire cache lors de l'exécution de l'instruction audio ;
la réception, par l'équipement d'utilisateur, des données audio correspondant à l'instruction audio envoyée par le serveur avant de recevoir l'instruction audio, dans lequel le serveur détermine que l'enregistrement d'envoi n'existe pas et appelle les données audio correspondant à l'instruction audio.

6. Procédé selon la revendication 5, dans lequel, avant la réception d'une instruction audio envoyée par le serveur, le procédé comprend en outre :
le stockage, par l'équipement d'utilisateur, des données audio correspondant à l'instruction audio dans la mémoire cache.

7. Procédé selon la revendication 6, dans lequel une tête de données des données audio comprend une valeur clé d'un fichier audio associé des données audio et une position de décalage et une longueur de décalage des données audio dans le fichier audio ; et
le stockage des données audio correspondant à l'instruction audio dans la mémoire cache comprend :
la détermination, par l'équipement d'utilisateur, du fichier audio associé en fonction de la valeur de clé du fichier audio ;
la détermination, par l'équipement d'utilisateur, d'une position de stockage des données audio dans le fichier audio associé en fonction de la position de décalage et de la longueur de décalage ; et
la mise en mémoire cache, par l'équipement d'utilisateur, des données audio dans le fichier audio associé en fonction de la position de stockage.

8. Serveur appliqué à un système interactif de cloud, le système interactif de cloud comprenant en outre un équipement d'utilisateur, et le serveur comprenant :
une unité de détection configurée pour détecter un appel de fonction d'une application interactive vers une interface audio lors de l'exécution de l'application interactive ;
une unité de génération configurée pour générer, en fonction d'un type de l'interface audio, une instruction audio correspondant au type lorsque l'appel de fonction de l'application interactive vers l'audio est détecté ;
une unité de détermination configurée pour, lorsque le serveur détermine que l'instruction audio a besoin de données audio en fonction du type de l'interface audio, déterminer s'il existe un enregistrement d'envoi en ce que les données audio correspondant à l'instruction audio générée par l'unité de génération sont déjà envoyées à l'équipement d'utilisateur ; et
une unité d'envoi, configurée pour envoyer l'instruction audio à l'équipement d'utilisateur si l'unité de détermination détermine que l'enregistrement d'envoi existe, dans lequel l'instruction audio est utilisée pour instruire l'équipement d'utilisateur d'utiliser les données audio mises en mémoire cache lors de l'exécution de l'instruction audio ;
une unité d'appel de fonction configurée pour appeler les données audio correspondant à l'instruction audio lorsque l'unité de détermination détermine que l'enregistrement d'envoi n'existe pas ; dans lequel l'unité d'envoi est en outre configurée pour envoyer séquentiellement les données audio appelées par l'unité d'appel de fonction et l'instruction audio à l'équipement d'utilisateur.

9. Serveur selon la revendication 8, comprenant en outre :
une unité d'ajout configurée pour ajouter un enregistrement d'envoi en ce que les données audio sont déjà envoyées à l'équipement d'utilisateur dans un enregistrement d'envoi de données une fois que l'unité d'envoi envoie les données audio.

10. Serveur selon la revendication 8 ou 9, dans lequel
l'unité de détection est configurée pour :
détecter l'appel de fonction de l'application interactive vers l'interface audio en utilisant une fonction Hook pour l'interface audio ; et
déterminer l'appel de fonction de l'application interactive vers l'interface audio si une instruction d'appel de fonction de l'application interactive vers l'interface audio est détectée comme entrant la fonction Hook pour l'interface audio.

11. Serveur selon l'une quelconque des revendications 8 à 10, dans lequel l'unité d'appel de fonction est configurée pour :
utiliser une fonction Hook pour la lecture de disque magnétique pour appeler les données audio correspondant à l'instruction audio ; et
appeler les données audio correspondant à l'instruction audio si une instruction d'appel de fonction de l'application interactive pour lire le disque magnétique est détectée comme entrant la fonction Hook pour la lecture de disque magnétique.

12. Équipement d'utilisateur appliqué à un système interactif de cloud, le système interactif de cloud comprenant en outre un serveur, et l'équipement d'utilisateur comprenant :
une unité de réception configurée pour recevoir une instruction audio envoyée par le serveur, dans lequel le serveur détecte un appel de fonction d'une application interactive vers une interface audio lors de l'exécution de l'application interactive et génère, en fonction d'un type de l'interface audio, l'instruction audio correspondant au type lorsque l'appel de fonction de l'application interactive vers l'interface audio est détecté ; lorsque le serveur détermine que l'instruction audio a besoin de données audio en fonction du type d'interface audio, le serveur détermine s'il existe un enregistrement d'envoi en ce que les données audio correspondant à l'instruction audio sont déjà envoyées à l'équipement d'utilisateur, et envoie l'instruction audio à l'équipement d'utilisateur si l'enregistrement d'envoi existe ;
une unité d'obtention configurée pour obtenir des données audio correspondant à l'instruction audio reçue par l'unité de réception à partir d'une mémoire cache ; et
une unité de traitement configurée pour utiliser les données audio obtenues par l'unité d'obtention lors de l'exécution de l'instruction audio ;
dans lequel l'unité de réception est en outre configurée pour recevoir les données audio correspondant à l'instruction audio envoyée par le serveur avant la réception de l'instruction audio, dans lequel le serveur détermine que l'enregistrement d'envoi n'existe pas et appelle les données audio correspondant à l'instruction audio.

13. Système interactif de cloud, comprenant un équipement d'utilisateur et un serveur, le serveur étant configuré pour :
détecter un appel de fonction d'une application interactive vers une interface audio lors de l'exécution d'une application interactive et générer, en fonction d'un type de l'interface audio, une instruction audio correspondant au type lorsque l'appel de fonction de l'application interactive vers l'interface audio est détecté ;
lorsque le serveur détermine que l'instruction audio a besoin de données audio en fonction du type de l'interface audio, déterminer s'il existe un enregistrement d'envoi en ce que les données audio correspondant à l'instruction audio sont déjà envoyées à l'équipement d'utilisateur ; et
envoyer l'instruction audio à l'équipement d'utilisateur si l'enregistrement d'envoi existe, dans lequel l'instruction audio est utilisée pour instruire l'équipement d'utilisateur d'utiliser les données audio mises en mémoire cache lors de l'exécution de l'instruction audio ;
appeler les données audio correspondant à l'instruction audio si l'enregistrement d'envoi n'existe pas, et envoyer séquentiellement les données audio et l'instruction audio à l'équipement d'utilisateur ; et
l'équipement d'utilisateur étant configuré pour :
recevoir l'instruction audio envoyée par le serveur ;
obtenir les données audio correspondant à l'instruction audio à partir d'une mémoire cache ; et
utiliser les données audio mises en mémoire cache lors de l'exécution de l'instruction audio ;
recevoir les données audio correspondant à l'instruction audio envoyée par le serveur avant de recevoir l'instruction audio.
